# FASCICULE DE BREVET EUROPEEN

(11) **EP 2 829 470 B1**
(45) Date de publication et mention de la délivrance du brevet: **06.04.2016**
(21) Numéro de dépôt: 14177657.5
(22) Date de dépôt: 18.07.2014
(51) Int. Cl.: B64C 25/40

(54) **Dispositif d'entraînement en rotation d'une roue d'aéronef**
Vorrichtung zum Drehantrieb eines Luftfahrzeugrads
Device for rotating an aircraft wheel

(30) Priorité: 26.07.2013 FR 1357428; 01.04.2014 FR 1452886
(43) Date de publication de la demande: 28.01.2015
(73) Titulaire: Messier-Bugatti-Dowty, 78140 Vélizy-Villacoublay (FR)
(72) Inventeur: Rodrigues, Fernand, 78140 VELIZY-VILLACOUBLAY (FR); Mazarguil, Nicolas, 78140 VELIZY-VILLACOUBLAY (FR)
(74) Mandataire: Parzy, Benjamin Alain

(56) Documents cités:
- GB-A- 603 792
- US-A- 2 050 741
- US-A1- 2011 156 472
- US-A1- 2013 167 678

## Description

L'invention est relative à un dispositif d'entraînement en rotation d'une roue d'aéronef.

### ARRIERE-PLAN TECHNOLOGIQUE DE L'INVENTION

On connaît des dispositifs d'entraînement en rotation d'une roue d'aéronef portée par un essieu d'un atterrisseur (voir le document US2011/156472). Les dispositifs comprennent généralement un actionneur d'entraînement avec un arbre équipé d'un pignon de sortie pour entraîner une couronne dentée solidaire d'une jante de la roue. Pour des raisons de sécurité, l'actionneur est généralement équipé d'un organe d'accouplement opérable pour accoupler ou désaccoupler sélectivement un moteur de l'actionneur et l'arbre de sortie de l'actionneur, de sorte que lors de phases où la roue de l'aéronef est motrice (par exemple l'atterrissage), celle-ci ne puisse entraîner le moteur.

Cependant, de telles dispositions s'avèrent lourdes et complexes à gérer.

### OBJET DE L'INVENTION

Un objet de l'invention est de proposer un dispositif d'entraînement en rotation d'une roue d'aéronef dans lequel la liaison positive entre la roue de l'aéronef et le moteur de l'organe d'entraînement peut être neutralisée simplement.

### PRESENTATION DE L'INVENTION

En vue de la réalisation de ce but, on propose un dispositif d'entraînement en rotation d'une roue d'aéronef selon la revendication 1, qui comporte une jante montée pour tourner sur un essieu d'un atterrisseur selon un axe de rotation, le dispositif comportant une couronne dentée d'entraînement solidarisée à la jante de la roue, et un actionneur d'entraînement comportant un pignon de sortie qui coopère avec la couronne dentée d'entraînement pour entraîner la roue en rotation. Selon l'invention, la couronne dentée d'entraînement est montée à rotation coaxialement à la jante de la roue, le dispositif d'entraînement comportant des moyens d'accouplement sélectif opérables pour lier en rotation ou libérer la jante de la roue et la couronne dentée d'entraînement.

Ainsi, la couronne dentée d'entraînement et le pignon de sortie restent en permanence en prise, mais la libération de la couronne permet une rotation de la roue de l'aéronef sans que celle-ci n'entraîne la couronne dentée d'entraînement, et donc le pignon de sortie de l'actionneur d'entraînement, dont le moteur est ainsi protégé des surrégimes de rotation.

Selon un mode préféré de réalisation, les moyens d'accouplement comportent des premiers cliquets disposés entre la jante de la roue et la couronne dentée d'entraînement pour être mobile entre une position rétractée dans laquelle ils laissent libre un mouvement de rotation relatif entre la couronne dentée d'entraînement et la jante, et une position en prise dans laquelle ils permettent un entraînement en rotation de la jante par la couronne dentée d'entraînement dans un premier sens de rotation.

De préférence, les moyens d'accouplement comportent des deuxièmes cliquets disposés entre la jante et la couronne dentée d'entraînement pour être mobile entre une position rétractée dans laquelle ils laissent libre un mouvement de rotation relatif entre la couronne dentée d'entraînement et la jante, et une position en prise dans laquelle ils permettent un entraînement en rotation de la jante par la couronne dentée d'entraînement dans un deuxième sens de rotation.

Selon un mode particulier de réalisation, les premiers et deuxièmes cliquets sont disposés par paires et sont portés par la couronne dentée d'entraînement en partageant un pivot commun, leurs positions angulaires respectives étant commandées au moyen de palettes s'étendant entre deux paires consécutives et qui sont montées pivotantes sur la couronne d'entraînement de sorte à relever sélectivement l'un des cliquets pour l'amener en prise avec la jante.

De préférence alors, les palettes sont chacune associées à un levier de commande dont la position angulaire est commandée par une couronne dentée auxiliaire montée coaxialement à la couronne dentée d'entraînement et dont un mouvement de rotation relatif par rapport à la couronne dentée d'entraînement provoque une rotation du levier et donc une rotation de la palette.

### PRESENTATION DES FIGURES

L'invention sera mieux comprise à la lumière de la description qui suit d'un mode particulier de réalisation de l'invention, en référence aux figures des dessins annexés parmi lesquelles :
- La figure 1 est un schéma en coupe du dispositif d'entraînement de l'invention en position sur un atterrisseur d'aéronef ;
- La figure 2 est une vue en en perspective partielle des deux couronnes dentées coaxiales et des deux pignons coaxiaux du dispositif d'entraînement de la figure 1 ;

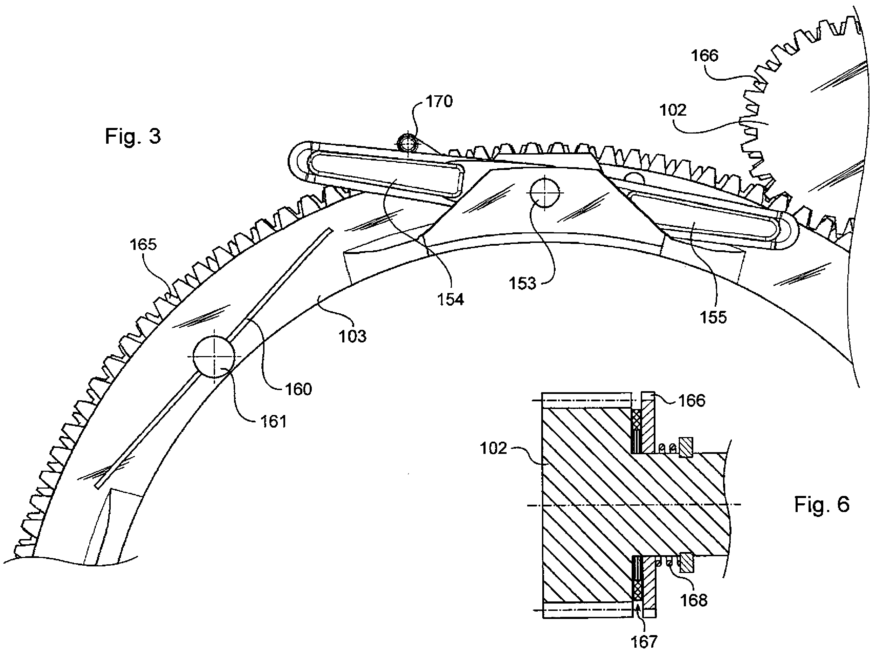

- La figure 3 est une vue de face partielle de la couronne dentée d'entraînement et des moyens d'accouplement sélectif ;
- La figure 4 montre l'autre face de la couronne dentée de la figure 3, ainsi que la partie de la jante de la roue en regard ;
- Les figures 5A à 5C illustre les différentes positions des leviers de commande des palettes de la figure 4 ;
- La figure 6 est une vue en coupe des pignons entraînés par l'actionneur d'entraînement ;
- La figure 7 est une vue en coupe des mêmes pignons, selon une variante de réalisation.

### DESCRIPTION DETAILLEE D'UN MODE DE REALISATION DE L'INVENTION

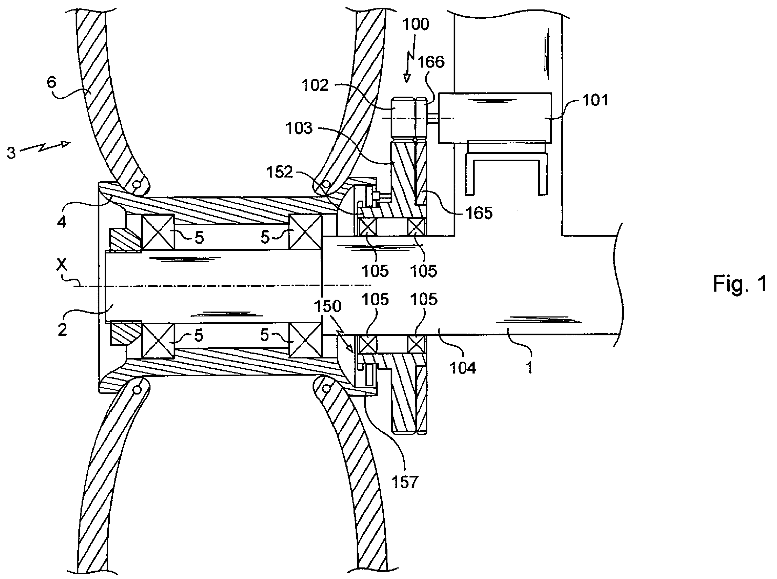

En référence à la figure 1, le dispositif de l'invention se monte sur un atterrisseur 1 d'un aéronef qui comporte un essieu 2 sur lequel une roue 3 est montée pour tourner selon un axe de rotation X. La roue 3 comporte une jante 4 tournant sur l'essieu par l'intermédiaire de roulements 5. La jante porte un pneumatique 6. Le dispositif 100 de l'invention est installé sur le côté de la jante et comporte un actionneur d'entraînement 101 fixé sur l'atterrisseur et comprenant un moteur (non visible ici) pour faire tourner un pignon d'entraînement 102. Le pignon d'entraînement coopère avec une couronne dentée d'entraînement 103 montée tournante sur un support 104 solidaire de l'essieu 2 selon un axe de rotation confondu avec celui de la roue 3, au moyen de roulements 105.

Le dispositif comporte des moyens d'accouplement sélectifs 150 permettant d'accoupler ou de désaccoupler en rotation la couronne dentée d'entraînement 103 à la jante 4 de la roue 3. Ces moyens d'accouplement permettent de solidariser ou de désolidariser la couronne de la roue, alors que le pignon d'entraînement 102 reste toujours en prise avec la couronne d'entraînement 103.

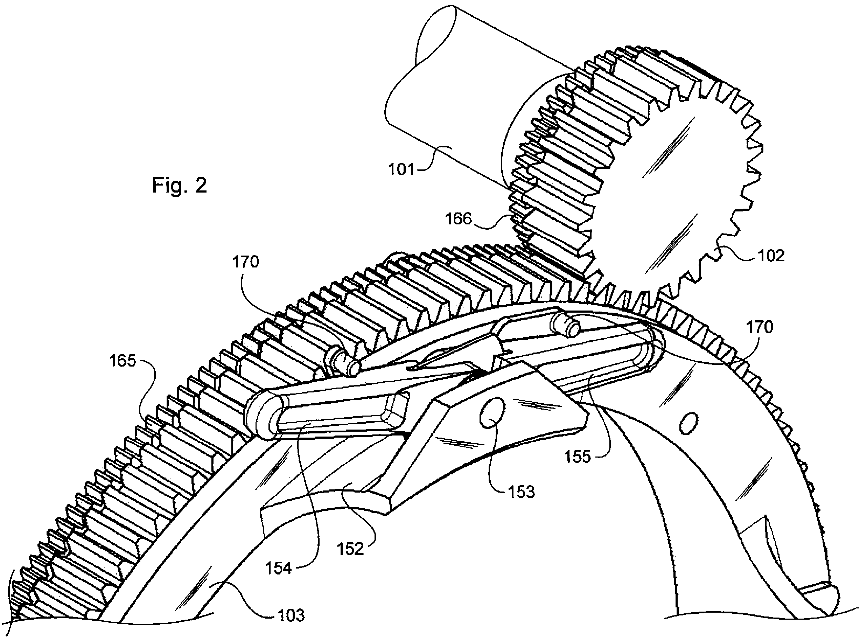

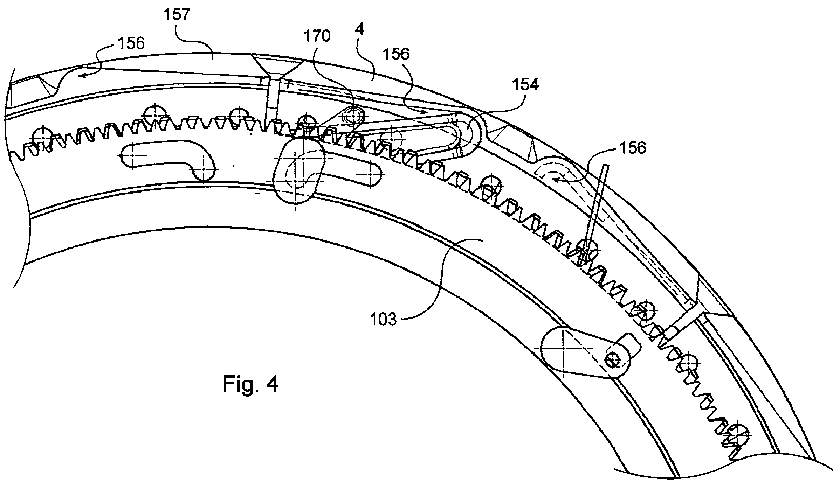

Les moyens d'accouplement sont maintenant détaillés en référence aux figures 2 et suivantes. Les moyens d'accouplement 150 comportent des bras articulés sur des talons 152 de la couronne dentée. Ces bras sont ici regroupés par paires et sont ici articulés sur un pivot commun 153. Sur chacun des pivots 153 se trouve dès lors un premier bras 154 orienté d'un côté, et un deuxième bras 155 orienté de l'autre côté. Les bras 154, 155 ont des extrémités arrondies aptes à être reçues dans des cavités respectives 156 taillées dans une jupe 157 de la jante (visible à la figure 4) qui vient coiffer les talons 152 de la couronne dentée d'entraînement 103. Dans la position illustrée à la figure 2, lorsque tous les premiers bras 154 sont relevés pour coopérer avec la jante, ils jouent le rôle de cliquets qui permettent l'entraînement de la jante par la couronne dentée d'entraînement dans un premier sens de rotation par coopération des extrémités des bras 154 avec les cavités 156 en regard. Lorsqu'au contraire ce sont les deuxièmes bras 155 qui sont relevés, ces derniers jouent le rôle de cliquets qui permettent l'entraînement de la jante par la couronne dentée d'entraînement dans un deuxième sens de rotation. Les bras 154, 155 sont ainsi mobiles entre une position rétractée (position du bras 155 sur la figure 2) dans laquelle ils laissent libre un mouvement de rotation relatif entre la couronne dentée et la jante, et une position en prise dans laquelle ils coopèrent avec la jante 4 pour permettre son entraînement par la couronne dentée d'entraînement 103.

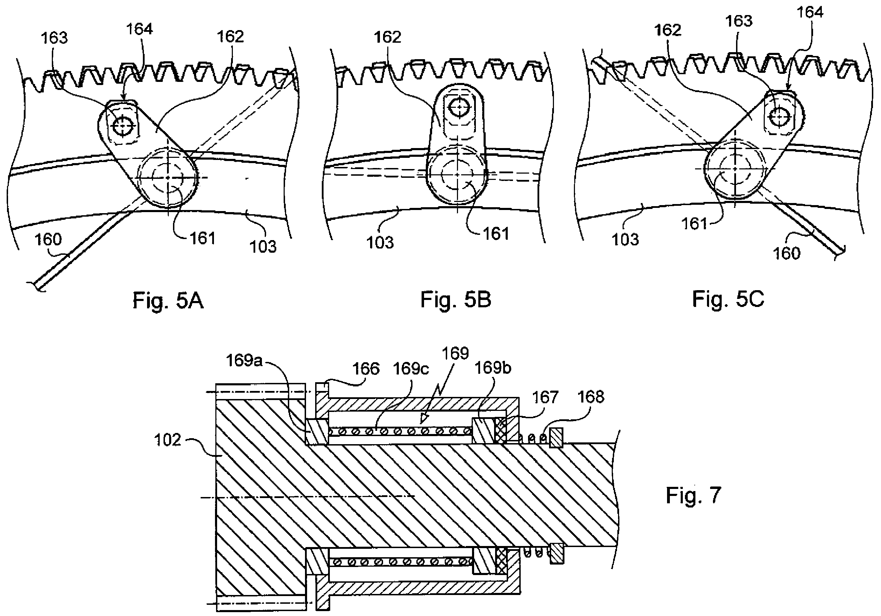

La commande des bras se fait ici de la façon suivante. Des palettes 160, ici des lames ressorts, sont disposées sur la couronne dentée d'entraînement 103 entre deux bras en regard pour pivoter entre deux positions extrêmes dans lesquelles elles relèvent respectivement l'un des bras 154, 155 en regard pour l'amener en position en prise. Ces positions extrêmes sont illustrées aux figures 5A et 5C. Chaque palette 160 est associée à un pivot 161 qui traverse l'épaisseur de la couronne dentée d'entraînement 103 pour aboutir à un levier de commande 162 qui porte à son extrémité un ergot 163. Le dit ergot 163 pénètre dans des lumières radiales 164 taillées dans une couronne auxiliaire 165 qui est montée pour tourner selon le même axe que la couronne dentée d'entraînement. Il suffit dès lors d'organiser une légère rotation différentielle de la couronne auxiliaire par rapport à la couronne dentée d'entraînement pour provoquer le pivotement du levier de commande, et, partant, de la palette 160, ce qui amène l'un des bras dans la position en prise.

Ce léger mouvement de rotation différentielle est ici obtenu comme suit. Le pignon d'entraînement 102 est doublé par un pignon de commande 166. Celui-ci est reçu sur le même arbre de sortie de l'actionneur d'entraînement 101, mais il est entraîné au moyen d'un dispositif de friction 167, qui permet le glissement du pignon de commande dès qu'un seuil de couple résistant est atteint. Le seuil est généré par un ressort 168 plaquant le pignon de commande 166 contre le dispositif de friction 167.

Les caractéristiques dimensionnelles des pignons 102, 166 d'une part, et des couronnes 103,165 d'autre part (nombres de dents, diamètres primitifs...) sont choisies de sorte que lorsque les pignons 102, 166 tournent à la même vitesse, la couronne dentée d'entraînement 103 et la couronne auxiliaire 165 tournent à des vitesses légèrement différentes, provoquant ainsi un mouvement de rotation relatif des deux couronnes.

Ainsi, lorsque l'actionneur d'entraînement 101 est mis en route, il entraîne la couronne d'entraînement 103 et la couronne auxiliaire 165 à des vitesses légèrement différentes, ce qui provoque la rotation des palettes 160, et donc la rotation de certains bras (soit tous les premiers bras, soit tous les deuxièmes bras) vers leur position en prise dans lesquelles ils provoquent l'accouplement en rotation de la couronne d'entraînement 103 et de la jante 4 de la roue 3. Lorsque les bras sont parvenus en position en prise, ils provoquent le blocage en rotation de la couronne auxiliaire 165 relativement à la couronne d'entraînement 103, ce qui provoque le glissement du pignon de commande 166 relativement au pignon d'entraînement 102.

Lorsque l'on veut désaccoupler la couronne dentée d'entraînement 103 de la jante 4, il suffit de faire tourner l'actionneur d'entraînement dans l'autre sens. Les couronnes adoptent alors un mouvement de rotation différentiel dans l'autre sens, ce qui ramène les palettes en position neutre telle qu'illustré à la figure 5B. Celui des bras qui était levé revient alors en position rétractée. Pour garantir le retour des bras dans leur position rétractée, des doigts 170 (visibles à la figure 2) sont montés pivotants sur la couronne dentée d'entraînement 103 selon le même principe que celui des palettes pour se dégager et permettre la levée de l'un des bras, ou au contraire pour s'abaisser et repousser les bras vers la position rétractée.

La commande des deux couronnes pourra se faire de multiples façons. On pourra par exemple intégrer un électroaimant pour sélectivement activer ou neutraliser l'effort exercé par le dispositif de friction 167 permettant d'entraîner le pignon de commande 166 avec le pignon d'entraînement 102.

Selon une variante illustrée à la figure 7, on interpose entre le dispositif de friction 167 et le pignon d'entraînement 102 un organe de décalage angulaire 169 à rappel interne qui permet d'introduire un décalage angulaire entre les deux pignons. Par exemple, l'organe de décalage angulaire est une boîte à ressort comportant deux plateaux latéraux 169a, 169b dont l'un est fixé au pignon d'entraînement 102 et l'autre sert d'appui aux disques du dispositif de friction 167, les deux plateaux étant reliés entre eux au moyen d'un ou plusieurs ressorts de torsion 169c qui permettent une rotation relative des plateaux à partir d'une position angulaire initiale à l'encontre d'un couple de rappel interne exercé par lesdits ressorts de torsion. Des butées internes permettent la rotation relative des deux plateaux entre eux jusqu'à un décalage angulaire maximal déterminé. On choisit de préférence ce décalage angulaire maximal comme étant légèrement supérieur au décalage de la couronne d'entraînement 102 par rapport à la couronne auxiliaire 165, multiplié par le rapport de réduction entre les pignons et les couronnes.

Le ou les ressorts de torsion sont dimensionnés pour présenter un couple seuil de torsion qui est inférieur au couple pouvant être généré par le dispositif de friction 167 sous l'action du ressort 168. L'opération de l'ensemble est alors la suivante. Lorsque l'actionneur d'entraînement 101 est mis en route, il entraîne le pignon d'entraînement 102 qui lui-même entraîne la couronne d'entraînement 103. Le couple généré par le dispositif de friction 107 étant plus élevé que le couple seuil de torsion de l'organe de décalage angulaire 169, celui-ci va provoquer un décalage angulaire entre les pignons jusqu'à atteindre le décalage angulaire maximal. Puis les deux pignons sont entraînés simultanément, jusqu'à ce que les bras 154 ou 155 soient parvenus dans leur position en prise, comme expliqué précédemment.

Lorsque l'aéronef est arrêté, et que les bras 154 ou 155 sont déchargés, le rappel interne dans le dispositif de décalage angulaire 169 oblige celui-ci à revenir dans sa position angulaire initiale, ce qui provoque une rotation en sens inverse du pignon de commande 167 et donc le retour automatique des bras 154 ou 155 en position rétractée.

L'invention n'est pas limitée à ce qui vient d'être décrit, mais englobe au contraire toute variante entrant dans le cadre défini par les revendications.

En particulier, bien que la solidarisation du pignon de commande au pignon d'entraînement soit ici effectuée au moyen d'un dispositif à friction à seuil, tout autre dispositif pourra être utilisé (magnétique, hydraulique...) du moment qu'il permette un glissement des deux pignons lorsque les couronnes sont bloquées en rotation entre elles.

## Revendications

1. Dispositif d'entraînement en rotation d'une roue d'aéronef qui comporte une jante (4) montée pour tourner sur un essieu (2) d'un atterrisseur selon un axe de rotation (X), le dispositif comportant une couronne dentée d'entraînement (103) et un actionneur d'entraînement (101) comportant un pignon de sortie (102) qui coopère avec la couronne dentée d'entraînement pour entraîner la roue en rotation, la couronne dentée d'entraînement étant apte à être montée à rotation coaxialement à la jante de la roue, le dispositif d'entraînement comportant des moyens d'accouplement sélectif (150) opérables pour lier en rotation la jante et la couronne d'entraînement ou les libérer, **caractérisé en ce que** les moyens d'accouplement comportent :
des premiers cliquets (154) disposés en service entre la jante et la couronne dentée d'entraînement pour être mobile entre une position rétractée dans laquelle ils laissent libre un mouvement de rotation relatif entre la couronne dentée d'entraînement et la jante, et une position en prise dans laquelle ils permettent un entraînement en rotation de la jante par la couronne dentée d'entraînement dans un premier sens de rotation,
des deuxièmes cliquets (155) disposés en service entre la jante et la couronne dentée d'entraînement pour être mobile entre une position rétractée dans laquelle ils laissent libre un mouvement de rotation relatif entre la couronne dentée d'entraînement et la jante, et une position en prise dans laquelle ils permettent un entraînement en rotation de la jante par la couronne dentée d'entraînement dans un deuxième sens de rotation ;
les premiers et deuxièmes cliquets étant disposés par paires et portés par la couronne dentée d'entraînement en partageant un pivot commun (153), leurs positions angulaires respectives étant commandées au moyen de palettes (160) s'étendant entre deux paires consécutives et qui sont montées pivotantes sur la couronne dentée d'entraînement (103) de sorte à relever sélectivement l'un des cliquets pour l'amener en prise avec la jante.

2. Dispositif selon la revendication 1, dans lequel les palettes (160) sont chacune associées à un levier de commande (163) dont la position angulaire est commandée par une couronne dentée auxiliaire (165) montée coaxialement à la couronne dentée d'entraînement et dont un mouvement de rotation relatif par rapport à la couronne dentée d'entraînement provoque une rotation du levier et donc une rotation de la palette.

3. Dispositif selon la revendication 2, dans lequel le levier de commande (163) de chacune des palettes comporte un ergot (163) qui pénètre dans une lumière longitudinale de la couronne auxiliaire (165).

4. Dispositif selon la revendication 2, dans lequel la couronne auxiliaire (165) est entraînée en rotation par un pignon de commande (166) coaxial au pignon d'entraînement (102) et tournant avec ce dernier, les pignons et les couronnes ayant des caractéristiques dimensionnelles telles qu'une rotation de même vitesse des pignons imprimée par l'actionneur d'entraînement provoque une rotation différentielle entre les couronnes.

5. Dispositif selon la revendication 4, dans lequel le pignon de commande (166) est relié en rotation au pignon d'entraînement (102) dernier par un dispositif de friction (167,168) à seuil de sorte que le pignon de commande tourne avec le pignon d'entraînement jusqu'à ce qu'un couple dépassant un seuil donné provoque son glissement.

6. Dispositif selon la revendication 5, dans lequel un dispositif à décalage angulaire (169) avec rappel interne est associé au dispositif à friction de sorte que le pignon de commande (102) ne tourne avec le pignon d'entraînement (166) que lorsqu'un décalage angulaire maximal permis par le dispositif à décalage angulaire a été atteint.

## Patentansprüche

1. Vorrichtung zum Drehantrieb eines Luftfahrzeugrades, das eine Felge (4) umfasst, die an einer Radachse (2) eines Fahrwerks drehbar um eine Drehachse (X) gelagert ist, wobei die Vorrichtung einen Antriebszahnkranz (103) und einen Antriebsaktor (101) umfasst, der ein Abtriebsritzel (102) umfasst, das mit dem Antriebszahnkranz zusammenwirkt, um das Rad drehend anzutreiben, wobei der Antriebszahnkranz dazu geeignet ist, koaxial zur Felge des Rades drehbar gelagert zu werden, wobei die Antriebsvorrichtung Mittel (150) zur selektiven Kopplung umfasst, die betätigbar sind, um die Felge und den Antriebszahnkranz drehbar miteinander zu verbinden oder sie zu lösen, **dadurch gekennzeichnet, dass** die Kopplungsmittel umfassen:
erste Sperrklinken (154), die im Betrieb zwischen der Felge und dem Antriebszahnkranz angeordnet sind, um zwischen einer eingefahrenen Stellung, in der sie eine relative Drehbewegung zwischen dem Antriebszahnkranz und der Felge zulassen, und einer Eingriffsstellung beweglich zu sein, in der sie einen Drehantrieb der Felge durch den Antriebszahnkranz in eine erste Drehrichtung gestatten,
zweite Sperrklinken (155), die im Betrieb zwischen der Felge und dem Antriebszahnkranz angeordnet sind, um zwischen einer eingefahrenen Stellung, in der sie eine relative Drehbewegung zwischen dem Antriebszahnkranz und der Felge zulassen, und einer Eingriffsstellung beweglich zu sein, in der sie einen Drehantrieb der Felge durch den Antriebszahnkranz in eine zweite Drehrichtung gestatten,
wobei die ersten und zweiten Sperrklinken paarweise angeordnet sind und von dem Antriebszahnkranz getragen werden, indem sie sich einen gemeinsamen Drehzapfen (153) teilen, wobei ihre jeweiligen Winkelpositionen mit Hilfe von Flügeln (160) gesteuert werden, die sich zwischen zwei aufeinander folgenden Paaren erstrecken und die an dem Antriebszahnkranz (103) derart drehbar gelagert sind, dass sie selektiv eine der Sperrklinken anheben, um sie in Eingriff mit der Felge zu bringen.

2. Vorrichtung nach Anspruch 1, wobei die Flügel (160) jeweils mit einem Steuerhebel (163) verbunden sind, dessen Winkelposition von einem Hilfszahnkranz (165) gesteuert wird, der koaxial zum Antriebszahnkranz gelagert ist und von dem eine relative Drehbewegung gegenüber dem Antriebszahnkranz eine Drehung des Hebels und folglich eine Drehung des Flügels hervorruft.

3. Vorrichtung nach Anspruch 2, wobei der Steuerhebel (163) jedes Flügels eine Nase (163) umfasst, die in ein Langloch des Hilfszahnkranzes (165) eindringt.

4. Vorrichtung nach Anspruch 2, wobei der Hilfszahnkranz (165) von einem Steuerritzel (166), das koaxial zum Antriebsritzel (102) ist und sich mit diesem letztgenannten dreht, drehend angetrieben wird, wobei die Ritzel und die Zahnkränze solche dimensionale Eigenschaften haben, dass eine Drehung der Ritzel mit gleicher Geschwindigkeit, die von dem Antriebsaktor aufgebracht wird, eine unterschiedliche Drehung unter den Zahnkränzen hervorruft.

5. Vorrichtung nach Anspruch 4, wobei das Steuerritzel (166) mit dem letzten Antriebsritzel (102) über eine Reibvorrichtung (167, 168) mit Schwellwert drehbar verbunden ist, derart, dass sich das Steuerritzel mit dem Antriebsritzel dreht, bis ein einen gegebenen Schwellwert überschreitendes Drehmoment sein Gleiten hervorruft.

6. Vorrichtung nach Anspruch 5, wobei eine Vorrichtung (169) mit Winkelversatz mit innerer Rückstellung mit der Reibvorrichtung derart verbunden ist, dass sich das Steuerritzel (102) nur mit dem Antriebsritzel (166) dreht, wenn ein von der Winkelversatzvorrichtung erlaubter maximaler Winkelversatz erreicht wurde.

## Claims

1. A device for driving rotation of an aircraft wheel comprising a rim (4) mounted to rotate on an axle (2) of landing gear about an axis of rotation (X), the device comprising a drive ring gear (103) and a drive actuator (101) having an outlet pinion (102) that co-operates with the drive ring gear to drive the wheel in rotation, the drive ring gear being mounted to rotate about the axis of the rim of the wheel, the drive device including selective coupling means (150) that are operable to link the rim and the drive ring gears together in rotation, or to disconnect them, the device being **characterized in that** the coupling means comprise:
· first pawls (154) arranged between the rim and the drive ring gear to be movable between a retracted position in which they leave relative movement in rotation free between the drive ring gear and the rim, and an engaged position in which they enable the rim to be driven in rotation by the drive ring gear in a first direction of rotation; and
· second pawls (155) arranged between the rim and the drive ring gear to be movable between a retracted position in which they leave relative movement in rotation free between the drive ring gear and the rim, and an engaged position in which they enable the rim to be driven in rotation by the drive ring gear in a second direction of rotation;
the first and second pawls being arranged in pairs and carried by the drive ring gear, each pair sharing a common pivot (153), their respective angular positions being controlled by means of blades (160) extending between two consecutive pairs and pivotally mounted on the drive ring gear (103) so as to raise selectively one or the other of the pawls in order to bring it into engagement with the rim.

2. A device according to claim 1, wherein each blade (160) is associated with a control lever (163) of angular position that is controlled by an auxiliary ring gear (165) mounted on the same axis as the drive ring gear such that rotary movement thereof relative to the drive ring gear causes the lever to turn and thus causes the blade to turn.

3. A device according to claim 2, wherein the control lever (163) of each of the blades includes a lug (163) that penetrates into a longitudinal slot in the auxiliary ring gear (165).

4. A device according to claim 2, wherein the auxiliary ring gear (165) is driven in rotation by a control pinion (166) on the same axis as the drive pinion (102) and rotating therewith, the pinions and the ring gears having dimensional characteristics such that the drive actuator causing the pinions to rotate at the same speed gives rise to differential rotation between the ring gears.

5. A device according to claim 4, wherein the control pinion (166) is connected to rotate with the drive pinion (102) by a threshold friction device (167, 168) such that the control pinion rotates with the drive pinion until a torque exceeding a given threshold causes it to slip.

6. A device according to claim 5, wherein an angular offset device (169) with internal return means is associated with the friction device such that the control pinion (102) turns with the drive pinion (166) only when a maximum angular offset allowed by the angular offset device has been reached.
